# EUROPÄISCHE PATENTSCHRIFT

(11) **EP 3 294 525 B1**
(45) Veröffentlichungstag und Bekanntmachung des Hinweises auf die Patenterteilung: **19.02.2020**
(21) Anmeldenummer: 17700013.0
(22) Anmeldetag: 02.01.2017
(51) Int. Cl.: B29C 49/48, B29C 49/56, B29C 49/06, B29L 31/00

(54) **UMFORMUNGSSTATION FÜR BLASFORMMASCHINEN OHNE DRUCKKISSEN**
RESHAPING STATION FOR BLOW MOLDING MACHINES WITHOUT PRESSURE PADS
POSTE DE MOULAGE POUR LES MACHINES DE MOULAGE PAR SOUFFLAGE SANS COUSSINS DE PRESSION

(30) Priorität: 31.03.2016 DE 102016105857
(43) Veröffentlichungstag der Anmeldung: 21.03.2018
(73) Patentinhaber: Krones AG, 93073 Neutraubling (DE)
(72) Erfinder: PHILIPP, Thomas, 93073 Neutraubling (DE); SPITZER, Thomas, 93073 Neutraubling (DE)
(74) Vertreter: Bittner, Bernhard
(86) Internationale Anmeldenummer: PCT/EP2017/050014
(87) Internationale Veröffentlichungsnummer: WO 2017/167461

(56) Entgegenhaltungen:
- EP-A1- 2 942 179
- EP-B1- 1 636 005
- DE-A1-102012 104 754
- US-A1- 2006 275 525
- US-B1- 9 050 749
- US-B2- 8 721 315

## Beschreibung

Die vorliegende Erfindung bezieht sich auf eine Umformungsstation zum Umformen von Kunststoffvorformlingen zu Kunststoffbehältnissen. Derartige Umformungsstationen, die Teile von Blasformmaschinen sein können werden verwendet, um Kunststoffflaschen herzustellen. Dabei werden erwärmte Kunststoffvorformlinge in Blasformen eingegeben und dort mittels Blasluft zu Kunststoffbehältnissen und insbesondere Kunststoffflaschen umgeformt. Zu diesem Zweck weisen diese Umformungsstationen üblicherweise Blasformträger auf, welche Teile von Blasformen tragen. Die Kunststoffvorformlinge werden in die Blasform eingegeben, diese wird geschlossen und anschließend erfolgt die Expansion des Kunststoffvorformlings.

Dabei ist es aus dem Stand der Technik bekannt, dass insbesondere die Stellen, an denen sich die Seitenteile der Blasformen kontaktieren, bei der Herstellung der Kunststoffvorformlinge kritisch sind und bei der fertiggestellten Flasche Nahten erzeugen. Im Stand der Technik sind unterschiedliche Vorgehensweisen bekannt, um diese Nahten gering zu halten. Insbesondere sind unterschiedlichste Verriegelungsmechanismen der Blasformteile bzw. der Blasformträger bekannt.

So sind Verriegelungstechniken bekannt, welche Verriegelungs-Wellensysteme, Magnetsysteme oder Stiftsysteme aufweisen. Üblicherweise werden jedoch nur die Formträgerhälften geschlossen und verriegelt, sodass hierdurch nicht unmittelbar ein bündiges und formschlüssiges Verriegeln der Formschalen bzw. der Blasformteile erreicht wird. So ist beispielsweise aus der EP1 636 005 B1 eine derartige Vorrichtung bekannt, bei der (als Verriegelungseinrichtung) verdrehgesicherte Widerhaken bezüglich einander in der Längsrichtung verschoben werden um so einen Eingriff zu bewirken. Weitere Verriegelungstechnicken sind aus den Dokumenten US9050749B1, DE102012104754A1 und US8721315B2 bekannt.

Um hierbei die Formspalte weiter zu verringern, ist es aus dem Stand der Technik bekannt, ein Druckkissensystem zu verwenden, wobei ein Blasformteil bei bereits geschlossener Blasform auf das andere mittels des Druckkissens zugedrückt wird. Die Notwendigkeit des Druckkissens zum bündigen und formbündigen Schließen der Blasform bedingt jedoch einen relativ hohen Aufwand, beispielsweise, um dieses Druckkissen mit Druckluft zu versorgen. Auch ist ein vergleichsweise hoher Aufwand zur Verschlauchung und hinsichtlich der Drucckissendichtung erforderlich. Daneben sind auch relativ hohe Prozesskosten erforderlich, um dieses Druckkissen anzusteuern und auch ein höherer störungstechnischer Aufwand sowie auch ein höherer Verschleiß.

Der vorliegenden Erfindung liegt daher die Aufgabe zugrunde, sowohl die Herstellungs- als auch die Prozesskosten zu senken. Insbesondere soll der Aufwand, der zur Bereitstellung des besagten Druckkissens erforderlich ist, reduziert werden. Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Umformungsstation zum Umformen von Kunststoffvorformlingen zu Kunststoffbehältnissen und insbesondere Kunststoffflaschen weist zwei Seitenteilträger auf, welche zum Tragen von Seitenteilen einer Blasform bestimmt sind. Weiterhin weist diese Umformungsstation bevorzugt einen Bodenteilträger zum Tragen eines Bodenteils der Blasform auf. Diese Seitenteile sowie das Bodenteil der Blasform bilden gemeinsam einen Hohlraum aus, innerhalb dessen die Kunststoffvorformlinge durch Beaufschlagung mit einem fließfähigen Medium und insbesondere mit Druckluft zu den Kunststoffbehältnissen umformbar sind.

Weiterhin ist wenigstens einer der beiden Seitenteilträger zum Öffnen und/oder Schließen der Blasform gegenüber dem anderen Seitenteilträger bezüglich einer vorgegebenen Hauptachse schwenkbar. Weiterhin weist die Umformungsstation einen Verriegelungsmechanismus auf, um in einem geschlossenen Zustand der Blasform einen Seitenteilträger mit dem anderen Seitenteilträger (und/oder ein Blasformteil mit dem anderen und/oder ein Blasformschalenteil mit dem anderen Blasformschalenteil) zu verriegeln. Weiterhin weist der Verriegelungsmechanismus ein zweites Verriegelungselement auf, welches bezüglich einer vorgegebenen Schwenkachse schwenkbar ist und welches zum Verriegeln der Seitenteilträger mit einem ersten Verriegelungselement ineinandergreift.

Erfindungsgemäß weist wenigstens eines der beiden Verriegelungselemente eine erste Kontaktoberfläche auf, welche dazu geeignet und bestimmt ist, beim Verriegeln mit dem ersten Verriegelungselement mit einer zweiten Kontaktoberfläche des ersten Verriegelungselements zusammenzuwirken, wobei wenigstens eine dieser Kontaktoberflächen derart ausgebildet ist, dass bei einem Schwenkvorgang des zweiten Verriegelungselements bezüglich der Schwenkachse in Richtung des ersten Verriegelungselements die beiden Seitenteilträger aufeinander zugedrängt werden.

Es wird daher vorgeschlagen, dass der Verriegelungsmechanismus bzw. das Verriegelungselement so ausgebildet ist, dass zunächst ein arretierter Zustand zwischen den Seitenteilträgern entsteht, wobei hier noch ein gewisser Formspalt möglich ist. Bevorzugt wird durch eine weitere Schwenkbewegung des Verriegelungselements ein Blasformteil, beispielsweise eine Blasformhälfte auf das andere Blasformteil, insbesondere die andere Blasformhälfte, zugestellt. Damit bewirken die Verriegelungselemente bevorzugt nicht nur ein Verriegeln der Seitenteilträger, sondern darüber hinaus in Abhängigkeit von der Schwenkstellung auch, dass die beiden Blasformteile aufeinander zugedrängt werden. Auf diese Weise kann ein Formspalt zwischen den beiden Blasformseitenteilen verringert werden. Bevorzugt handelt es sich bei der Schwenkachse um welche das Verriegelungselement geschwenkt wird, um eine Schwenkachse, welche parallel zu einer Längsachse der umzuformenden Behältnisse verläuft.

Die Erfindung beschreibt damit ein Verriegelungssystem einer Umformungsstation bzw. Blasformeinheit, welches bevorzugt zwei ineinander greifende Schließelemente bzw. Verriegelungselemente aufweist, wobei wenigstens ein Verriegelungselement drehbar gelagert ist. Mindestens eines dieser Schließelemente bzw. Verriegelungselemente weist dabei bevorzugt in einem Eingriffsbereich des zweiten Verriegelungselements eine Kontaktoberfläche und insbesondere einen Radius oder eine ähnliche Geometrie auf, welche vorab ein Schließen der Seitenteilträger gewährleistet und zudem, je nach Ausführung dieser Oberfläche oder der ähnlichen Geometrie, ein Heranziehen und bündiges und/oder formschlüssiges Verschließen der Formträgerhälften bzw. Seitenteilträger ermöglicht.

Bevorzugt weist das jeweils andere Verriegelungselement ebenfalls eine entsprechende Oberfläche auf, welche auf die erstgenannte Oberfläche des ersten Verriegelungselements angepasst ist. Auf diese Weise wird eine Doppelfunktion erfüllt, nämlich die Seitenteilträger arretiert und zusätzlich ein bündiges und/oder formschlüssiges Verschließen der Formschalen und/oder der Blasformteile bewirkt. Durch dieses bündige Verschließen der Formschalen kann die Notwendigkeit eines Druckkissens entfallen, welches im Stand der Technik zum bündigen Schließen dieser Formschalen oder Blasformteile verwendet wurde, um die gewünschte Qualität der Trennnaht zu gewährleisten. Diese Qualität wird hier durch das bündige und/oder formschlüssige Heranziehen des jeweils anderen Seitenteilträgers gewährleistet. Auf diese Weise kann erreicht werden, dass die gesamte Druckkisseneinheit entfällt und auch kein Aufwand bezüglich einer Leckage des Druckkissens entsteht.

Bevorzugt tritt auch eine verbesserte Selbsthemmung durch die Oberfläche, beispielsweise den Radius oder die ähnliche Geometrie, an zumindest einem der beiden Verriegelungselemente auf. Unter Selbsthemmung versteht man in der Mechanik den durch Reibung verursachten Widerstand gegen ein Verrutschen oder ein Verdrehen zweier aneinander liegender Körper. Sobald die Haftreibung überschritten ist, sind die Körper nicht mehr selbsthemmend. Die Selbsthemmung durch Größen wie den Neigungswinkel, die Oberflächenrauigkeit der Auflageflächen, die Werkstoffpaarung, die Gleitgeschwindigkeit, aber auch durch den Schmierstoff und die Erwärmung beeinflusst.

Um Selbsthemmung zu erreichen, wird der resultierende Winkel kleiner als der Arcustangens der Haftreibungszahl ausgeführt. Wenn also im vorliegenden Beispiel der Winkel zwischen den Oberflächen bei 2,86° liegt würde sich zum Erreichen der Selbsthemmung eine Gleitreibungszahl von 0,05 ergeben (bzw. umgekehrt müsste bei einer Gleitreibungszahl von 0,05 der Winkel bei 2,86° (oder geringer) gewählt werden. Eine Gleitreibungszahl von 0,05 ist realistisch, wenn Stahl auf (geschmiertes) Stahl triff, wobei dies den hinsichtlich der Reibung ungünstigsten Zustand darstellt. Damit wird bevorzugt der Winkel zwischen den Oberflächen derart gewählt, dass die erwähnte Selbsthemmung auftritt.

Bevorzugt werden keine zueinander ebenen Flächen vorgesehen, sondern eine leicht, insbesondere durch den Radius, gekrümmte Fläche. Dies erhöht zusätzlich die Sicherheit, da die gekrümmte Fläche wie ein "Wiederhaken" funktioniert.

Auf diese Weise kann auch der Verschleiß verringert werden. Daneben ist auch kein steuerungstechnischer Aufwand vorhanden, um ein Druckkissen anzusteuern und insbesondere kann beispielsweise auf pneumatische Ventile verzichtet werden.

Bei einer bevorzugten Ausführungsform werden bei einem Schwenkvorgang des zweiten Verriegelungselements in Richtung des ersten Verriegelungselements und bezüglich der Schwenkachse zunächst die beiden Seitenteilträger bezüglich einander arretiert und anschließend aufeinander zugedrängt. Dies kann dabei in der Weise erfolgen, dass bevorzugt zunächst bei einem Schwenkvorgang des zweiten Verriegelungselements um einen ersten Winkel ein Verriegelungselement das andere hintergreift und bei einem weiteren Schwenken in der gleichen Richtung bzw. in der gleichen Schwenkrichtung die beiden Seitenteile aufeinander zugedrängt werden. Bevorzugt findet also zunächst ein Eingriff statt, der die Umformungsstation in einem geschlossenen Zustand arretiert und erst anschließend ein Zustellen des einen Seitenteilträgers auf den anderen Seitenteilträger zu.

Bei einer weiteren vorteilhaften Ausführungsform ist die Umformungsstation druckkissenfrei ausgebildet. Dies bedeutet, dass auf das Anbringen eines Druckkissens, beispielsweise zwischen dem Seitenteilträger und einer Formschale oder auch einer Formschale und dem Seitenteil der Blasform verzichtet wird. Vielmehr erfolgt die Bewegung, die ansonsten durch das Druckkissen ermöglicht wird, durch den beschriebenen Zustellvorgang, der während des Verriegelns durchgeführt wird. Bevorzugt bewirkt daher die Verriegelungsbewegung der Seitenteilträger auch ein Zustellen der beiden Seitenteile der Blasform aufeinander zu.

Bei einer weiteren vorteilhaften Ausführungsform weist die Kontaktoberfläche eines Verriegelungselements einen gekrümmten und/oder schrägen Abschnitt auf, der mit der Kontaktoberfläche des anderen Verriegelungselements zusammenwirkt, um die beiden Seitenteilträger aufeinander zuzustellen. Bei diesem gekrümmten und/oder schrägen Abschnitt kann es sich um einen gekrümmten Abschnitt mit einem bestimmten Radius handeln und/oder auch um einen schrägen Abschnitt.

Bevorzugt ist wenigstens ein Verriegelungselement hakenartig ausgebildet. Bevorzugt sind beide Verriegelungselemente hakenartig ausgebildet. Bevorzugt erstreckt sich wenigstens ein Verriegelungselement entlang der Richtung der Hauptachse. Bevorzugt erstrecken sich beide Verriegelungselemente entlang der Richtung der Hauptachse. Bevorzugt ist wenigstens ein Verriegelungselement kontinuierlich entlang der Hauptachse ausgebildet. Es wäre jedoch auch möglich, dass mehrere Verriegelungselemente entlang der Richtung der Hauptachse hintereinander und bevorzugt auch beabstandet zueinander angeordnet sind.

Weiterhin weist die Vorrichtung bevorzugt eine Dämpfungs- und/oder Federungseinrichtung auf, welche bei einem Schließen der Blasform diese Schließbewegung dämpft. Diese Dämpfungseinrichtung ist dabei bevorzugt an wenigstens einem der beiden Seitenteilträger angeordnet. Bevorzugt weist die Vorrichtung zwei derartige Dämpfungs- und/oder Federungselemente auf. Besonders bevorzugt ist wenigstens ein Verriegelungselement in Richtung der Hauptachse zwischen diesen beiden Dämpfungs- und/oder Federungselementen angeordnet. Diese Dämpfungselemente können dabei ein elastisches Material und/oder ein Federelement aufweisen. Bevorzugt wirken diese Dämpfungs- und/oder Federungselemente einer Schließbewegung der Seitenteilträger entgegen.

Bei einer weiteren vorteilhaften Ausführungsform sind das erste Verriegelungselement und das zweite Verriegelungselement derart ausgebildet, dass in einer vorgegebenen Schwenkstellung des zweiten Verriegelungselements gegenüber dem ersten Verriegelungselement sich die Kontaktoberflächen der beiden Verriegelungselements gegenüber stehen, jedoch ein Spalt zwischen den beiden Kontaktoberflächen ausgebildet ist.

Hierbei handelt es sich um eine Stellung, in der die Blasform im Wesentlichen geschlossen ist, bzw. nicht mehr geöffnet werden kann, da dies dann durch die Kontaktoberflächen der beiden Verriegelungselemente verhindert wird. Der Spalt wird dabei bevorzugt in einer Umfangsrichtung der Schwenkbewegung der beiden Blasformträgerteile und/oder einer Umfangsrichtung der Schwenkbewegung des wenigstens einen Verriegelungselements ausgebildet. Bevorzugt überlappen sich die Kontaktoberflächen in einer Umfangsrichtung der Schwenkbewegung in dieser Position derart, dass beim Öffnen diese Kontaktoberflächen aneinander anstoßen würden.

Bevorzugt überlappen sich die Kontaktoberflächen und/oder die Verriegelungselemente derart, dass ein Öffnen der Blasform eben durch diese Überlappung verhindert wird, insbesondere da bei einem Öffnen die Kontaktoberflächen aneinanderstoßen.

Dies wird unter Bezugnahme auf die Figuren weiter erläutert. Dabei kann die Ausführung derart erfolgen, dass sich in dieser ersten Schwenkposition die beiden Verriegelungselemente gegenüber liegen, jedoch noch einen vorgegebenen Abstand bzw. Spalt zueinander aufweisen.

Dieser Spalt kann sich dabei in einer radialen Richtung der Schwenkbewegung des wenigstens einen Blasformträgerteils erstrecken. Der besagte Spalt ermöglicht daher ein gewisses Spiel der Träger, bevor insgesamt die Blasformträgerteile geschlossen werden.

Bei einer weiteren vorteilhaften Ausführungsform ist dieser besagte Spalt durch eine weitere Schwenkbewegung des zweiten Verriegelungselements verringerbar. Bei dieser weiteren Schwenkbewegung handelt es sich insbesondere um eine weitere Schwenkbewegung in Richtung eines vollständig verriegelten Zustands und/oder eine Schwenkbewegung, welche sich an die obige Schwenkbewegung, welche zu dem Überlappen zwischen den Verriegelungselementen führt, anschließt. Durch dieses Verringern des Formspalts wird damit die eine Kontaktoberfläche des einen Verriegelungselements auf die entsprechende zweite Kontaktoberfläche des ersten Verriegelungselements zugestellt und kontaktiert diese schließlich. Bei einer weiteren Bewegung können weiter die beiden Blasformträgerteile noch weiter aufeinander zugestellt werden.

Damit wird der Spalt durch eine weitere Schwenkbewegung des zweiten Verriegelungselements geschlossen. Bevorzugt erstreckt sich der oben erwähnte Spalt ebenfalls in Richtung der Hauptachse.

Bei einer weiteren vorteilhaften Ausführungsform weisen die Seitenteile und/oder die die Seitenteile tragenden Formschalen einander flächig kontaktierende Kontaktieroberflächen auf. Durch diese Ausgestaltung können die Formschalen und/oder die Seitenteile bündig mit einer flächigen Kontaktieroberfläche aneinandergelegt werden, sodass der Formspalt zwischen den Seitenteilen gering gehalten werden kann.

Bei einer weiteren vorteilhaften Ausführungsform weist wenigstens eine dieser Kontaktieroberflächen einen sich in Richtung der Hauptachse erstreckenden Vorsprung auf. Dabei kann es sich beispielsweise um einen gekrümmten oder nasenartigen Vorsprung handeln.

Bei einer weiteren vorteilhaften Ausführungsform weist die andere dieser Kontaktieroberflächen eine sich in Richtung der Hauptachse erstreckende Ausnehmung auf, welche besonders bevorzugt an den genannten Vorsprung angepasst ist. Dabei kann in einem geschlossenen Zustand der Blasform der Vorsprung in der Ausnehmung liegen. Auf diese Weise wird eine sehr exakte Zentrierung der beiden Blasformseitenteile und/oder der Formschalen bewirkt.

Bei einer weiteren vorteilhaften Ausführungsform ist wenigstens eine der Kontaktoberflächen der Verriegelungselemente eine gehärtete Kontaktoberfläche. Vorteilhaft handelt es sich bei beiden Kontaktoberflächen um gehärtete Kontaktoberflächen. Auf diese Weise kann einer schnellen Abnutzung dieser Kontaktieroberflächen, welche vergleichsweise hohe Kräfte aufnehmen müssen, vermieden werden.

Die vorliegende Erfindung ist weiter auf eine Vorrichtung zum Umformen von Kunststoffvorformlingen zu Kunststoffbehältnissen gerichtet, wobei diese Vorrichtung einen bewegbaren und insbesondere drehbaren Träger aufweist, an den eine Vielzahl der oben beschriebenen Umformungsstationen angeordnet ist. Vorteilhaft weisen die Umformungsstationen jeweils stangenartige Körper auf, welche in die Kunststoffvorformlinge einführbar sind, um diese in deren Längsrichtung zu dehnen.

Bei einer weiteren vorteilhaften Ausführungsform weisen die Umformungsstationen jeweils Beaufschlagungseinrichtungen auf, um die Kunststoffvorformlinge mit einem fließfähigen und insbesondere gasförmigen Medium zu beaufschlagen. Bei diesen Beaufschlagungseinrichtungen kann es sich beispielsweise um Blasdüsen handeln, welche an einen Mündungsrand der Kunststoffvorformlinge anlegbar sind.

Bei einer weiteren vorteilhaften Ausführungsform weist die oben beschriebene Umformungsstation auch einen Bodenteilträger auf, der zum Schließen der Blasform mit den beschriebenen Seitenteilträgern arretierbar ist.

Die vorliegende Erfindung ist weiterhin auf ein Verfahren zum Schließen einer Umformungsstation zum Umformen von Kunststoffvorformlingen zu Kunststoffbehältnissen gerichtet. Dabei weist die Umformungsstation zwei Seitenteilträger zum Tragen von Seitenteilen einer Blasform auf, sowie bevorzugt auch einen Bodenteilträger zum Tragen eines Bodenteils der Blasform. Dabei bilden diese Seitenteile und das Bodenteil der Blasform gemeinsam einen Hohlraum aus, innerhalb dessen die Kunststoffvorformlinge durch Beaufschlagung mit einem fließfähigen und insbesondere gasförmigen Medium zu den Kunststoffbehältnissen umgeformt werden.

Dabei wird wenigstens einer der beiden Seitenteilträger zum Schließen der Blasform gegenüber dem anderen Seitenteilträger bezüglich einer vorgegebenen Hauptachse geschwenkt und die Umformungsstation weist weiterhin einen Verriegelungsmechanismus auf, um in einem geschlossenen Zustand der Blasform einen Seitenteilträger mit dem anderen Seitenteilträger zu verriegeln. Weiterhin weist der Verriegelungsmechanismus ein zweites Verriegelungselement auf, welches bezüglich einer vorgegebenen Schwenkachse geschwenkt wird und welches zum Verriegeln der Seitenteilträger mit einem ersten Verriegelungselement ineinandergreift.

Erfindungsgemäß weist wenigstens eines der beiden Verriegelungselemente eine erste Kontaktoberfläche auf, welche dazu geeignet ist, beim Verriegeln mit dem ersten Verriegelungselement mit einer zweiten Kontaktoberfläche des ersten Verriegelungselements zusammenzuwirken, wobei wenigstens eine dieser Kontaktoberflächen derart ausgebildet ist, dass bei einem Schwenkvorgang des zweiten Verriegelungselements bezüglich der Schwenkachse in Richtung des ersten Verriegelungselements die beiden Seitenteilträger aufeinander zugedrängt werden.

Es wird daher auch verfahrensseitig vorgeschlagen, dass mittels der Verriegelungselemente zunächst ein Verriegeln bzw. Arretieren der Blasformträgerteile erfolgt, wobei hier noch ein gewisser Spalt bzw. ein gewisses Spiel in der Schwenkbewegung ermöglicht wird. Durch eine weitere Zustellung des Verriegelungselements wird dieser Spalt geschlossen und bevorzugt werden auch die Blasformteile aufeinander zugedrängt. Bevorzugt findet auch hier der eigentliche Expansionsvorgang der Kunststoffvorformlinge ohne die Verwendung eines Druckkissens statt. Bevorzugt ist wird eine Umformungsstation der oben beschriebenen Art für das Verfahren verwendet.

Weitere Vorteile und Ausführungsformen ergeben sich aus den beigefügten Zeichnungen. Darin zeigen:
- Fig. 1: Eine schematische Darstellung einer Umformungsstation;
- Fig. 2: eine Darstellung einer Umformungsstation in einem noch nicht vollständig geschlossenen Zustand, wobei jedoch eine Arretierung der Seitenteilträger vorliegt;
- Fig. 3: eine Darstellung der Umformungsstation in einem noch nicht verriegelten Zustand;
- Fig. 4: eine Detaildarstellung des Verriegelungsmechanismus in einem arretierten, jedoch noch nicht vollständig verriegelten Zustand;
- Fig. 5: eine weitere Detaildarstellung einer Umformungsstation in dem arretierten, jedoch noch nicht vollständig verriegelten Zustand;
- Fig. 6: eine Darstellung zweier Verriegelungselemente nach dem Stand der Technik;
- Fig. 7: eine Darstellung zweier erfindungsgemäßer Verriegelungselemente;
- Fig. 7a: eine vergrößerte Ansicht der in Fig. 7 gezeigten Darstellung;
- Fig. 8: eine Darstellung eines Seitenteilträgers für eine Blasform; und
- Fig. 9: eine Seitenansicht des in Fig. 8 gezeigten Seitenteilträgers.

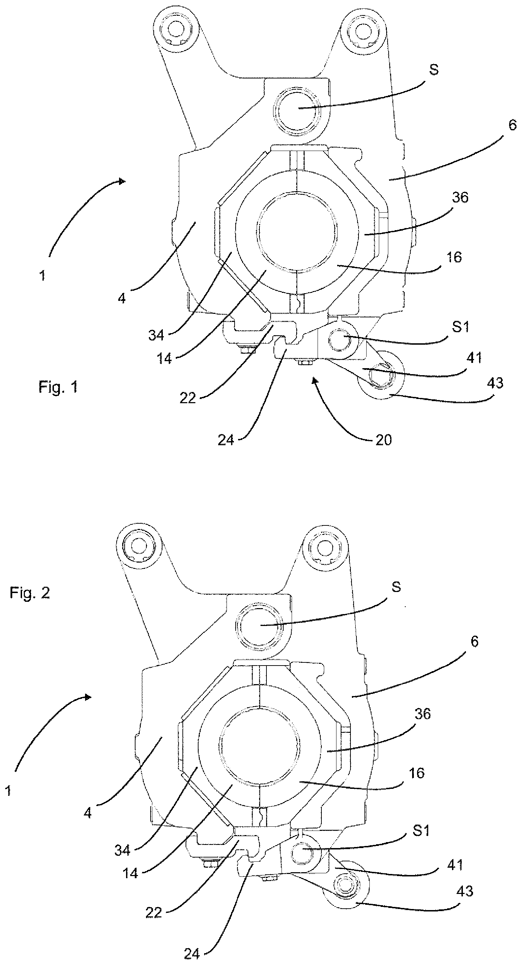

Figur 1 zeigt eine Darstellung einer erfindungsgemäßen Umformungsstation 1. Diese Umformungsstation 1 weist zwei Seitenteilträger 4 und 6 auf. Diese sind bezüglich einander und bezüglich einer Hauptachse S schwenkbar. Dabei ist es möglich, dass beide Seitenteilträger bezüglich dieser Hauptachse geschwenkt werden. Auch wäre es möglich, dass nur einer der beiden Seitenteilträger gegenüber der Hauptachse geschwenkt wird. Auch wäre es denkbar, dass zwei zueinander parallele Achsen vorgesehen sind, bezüglich derer die beiden Seitenteilträger geschwenkt werden. Die Hauptachse S bzw. eine entsprechende Schwenkwelle verläuft hier senkrecht zu der Figurenebene. An den beiden Blasformträgerteilen sind jeweils Formschalen 34 und 36 angeordnet. An diesen Formschalen 34 und 36 wiederum sind Blasformseitenteile 14 und 16 angeordnet.

Das Bezugszeichen 20 kennzeichnet in seiner Gesamtheit einen Verriegelungsmechanismus, der zum Verriegeln der beiden Seitenteilträger 4 und 6 insbesondere während eines Blasvorgangs dient. Zu diesem Zweck ist ein erstes Verriegelungselement 22 vorgesehen, welches an dem ersten Seitenteilträger 4 befestigt ist. Ein zweites Verriegelungselement 24 ist schwenkbar an dem zweiten Seitenteilträger angeordnet. Dabei ist insbesondere eine Schwenkung dieses zweiten Verriegelungselements 24 bezüglich einer Schwenkachse S1 möglich. Das Bezugszeichen 41 kennzeichnet einen Hebelarm, mittels dessen die Verschwenkung des Verriegelungselements 24 bezüglich der Schwenkachse S1 erreicht werden kann. Die Schwenkachse S1 wiederum ist parallel zu der Hauptschwenkachse S. Zum Schwenken des Verriegelungselements kann eine Kurvenrolle 43 vorgesehen sein mit einer insbesondere stationären (nicht gezeigten) Führungskurve. Daneben wären jedoch auch andere Antriebe denkbar, wie insbesondere elektrische Antriebe, welche zum Schwenken der Seitenteilträger dienen.

Figur 2 zeigt die Umformungsstation 1 in einem Zustand, in dem die Seitenteilträger bzw. die Blasformteile 14 und 16 nahezu geschlossen sind, jedoch noch keine vollständige Verriegelung vorliegt. Dabei erkennt man, dass die beiden Verriegelungselemente 22 und 24 zwar schon ineinander greifen, jedoch noch nicht vollständig miteinander verschlossen sind. Ein Öffnen der Blasform ist jedoch hier nicht mehr möglich.

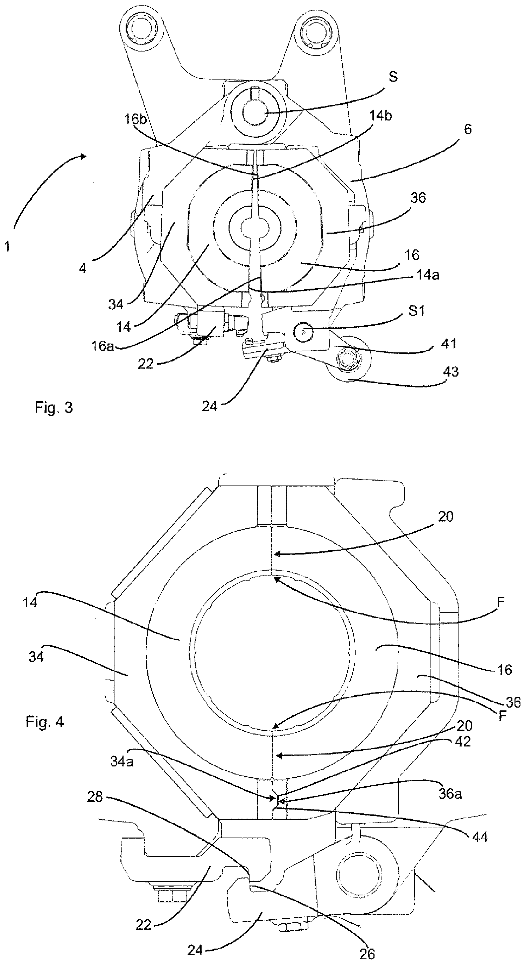

Figur 3 zeigt eine Darstellung der Umformungsstation 1 in einem noch nicht geschlossenen Zustand. Hier greifen die beiden Verriegelungselemente 22 und 24 noch nicht ineinander und die Blasformseitenteile 14 und 16 sind noch einen deutlichen Spalt geöffnet. Die Bezugszeichen 14a und 14b beziehen sich auf Berühroberflächen des ersten Blasformteils und die Bezugszeichen 16a und 16b auf Berühroberflächen des zweiten Blasformteils. In einem geschlossenen Zustand der Blasform liegen die Kontaktoberflächen 14a und 16a sowie 14b und 16b aneinander. Durch die Genauigkeit dieses Anliegens wird auch der entstehende Formspalt bestimmt. Die Ausgestaltung der Verriegelungselemente bewirkt daher, dass diese beiden Kontaktoberflächen besonders präzise aneinander gedrückt werden.

Figur 4 zeigt wiederum eine vergrößerte Darstellung ähnlich Figur 2. Hier greifen zwar die beiden Verriegelungselemente 22 und 24 schon ineinander, es liegt jedoch noch kein vollkommen geschlossener Zustand vor. Man erkennt weiterhin, dass die Formträgerschalen 34 und 36 jeweils Kontaktflächen 42 und 44 miteinander ausbilden. Dabei weist die Kontaktfläche 42 einen Vorsprung 34a auf. Die Kontaktfläche 44 weist eine Ausnehmung 36a auf. Diese können dabei ineinander eingreifen. Dieser Vorsprung 34a und die Ausnehmung 36a bilden damit eine relativ große gemeinsame Kontaktoberfläche miteinander aus.

Weiterhin weist das erste Verriegelungselement eine Kontaktoberfläche 28 auf und das zweite Verriegelungselement 24 eine zweite Kontaktoberfläche 26. Diese wirken, wie ebenfalls unten genauer dargestellt, miteinander, sodass zunächst eine Arretierung der Seitenteilträger und später dann auch ein Zustellen der beiden Seitenteilträger aufeinander zu und damit auch eine Minimierung des Formspalts erreicht wird.

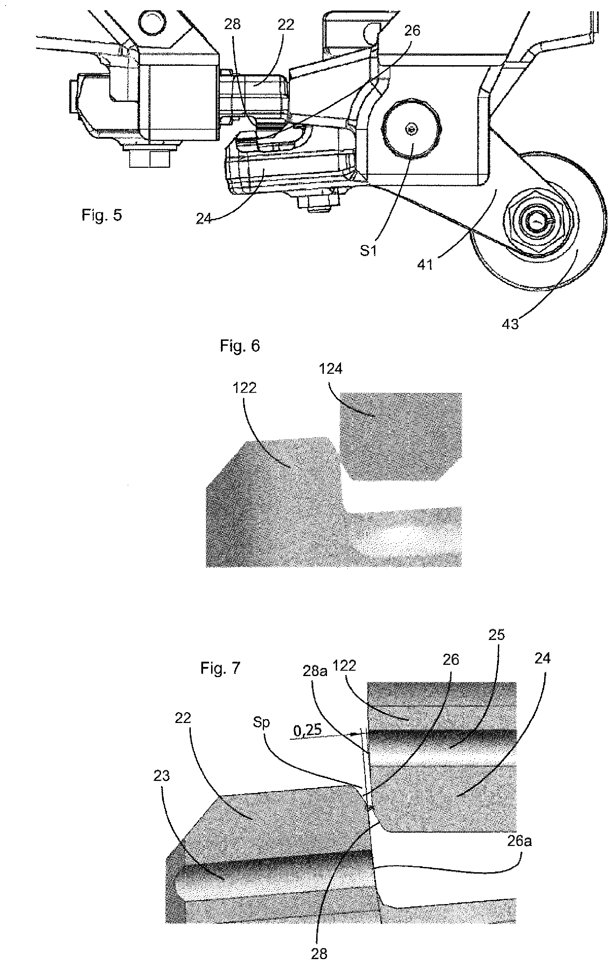

Figur 5 zeigt eine weitere Darstellung in einem nahezu geschlossenen Zustand. Auch hier erkennt man wieder die Kontaktoberflächen 26 und 28, die ein Verriegeln der Blasform sowie auch das Aufeinanderzubewegen der Seitenteilträger bewirken.

Figur 6 zeigt eine Detaildarstellung der Verriegelungselemente 122 und 124 nach dem Stand der Technik. Man erkennt, dass diese sich bereits in der gezeigten Stellung einander berühren. Auf diese Weise ist hier kein Spalt mehr ausgebildet, der ein gewisses Spiel zwischen den Blasformteilen ermöglicht. Auch wird so bei einem weiter fortgesetzten Schwenken kein weiteres Zustellen der Blasformteile aufeinander zu mehr erreicht.

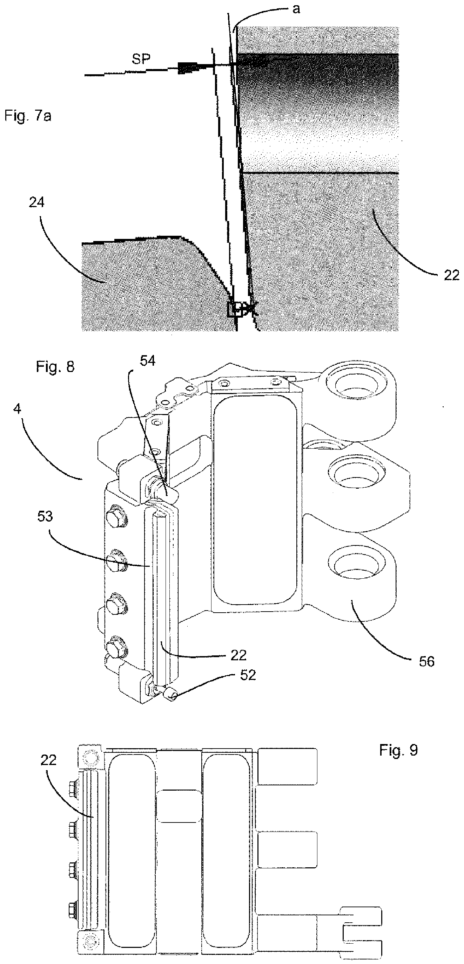

Figur 7 zeigt eine Darstellung zweier erfindungsgemäßer Verriegelungselemente. Man erkennt hier, dass die Kontaktoberflächen 26 und 28 jeweils im Wesentlichen geradlinige Abschnitte 26a und 28a aufweisen. Bei dem in Figur 4 gezeigten Zustand wird zwischen den beiden Kontaktoberflächen 26 und 28 ein Spalt Sp ausgebildet. Dieser kann eine Breite beispielsweise zwischen 0,1 mm und 0,5 mm, bevorzugt zwischen 0,15 mm und 0,35 mm und besonders bevorzugt zwischen 0,2 mm und 0,3 mm aufweisen. Während dieser Spalt aufgebaut wird, besteht damit noch ein gewisses Spiel der beiden Verriegelungselemente bezüglich einander und damit auch hinsichtlich der beiden Seitenteilträger, an denen diese Verriegelungselemente angeordnet sind. Bei einer weiteren Bewegung wird dieser Spalt vollständig geschlossen und die beiden Verriegelungselemente werden auch aufeinander zugedrängt. Auf diese Weise wird auch der Formspalt zwischen den Blasformteilen geschlossen.

Die Bezugszeichen 23 und 25 beziehen sich jeweils auf Ausnehmungen, die in den beiden Verriegelungselementen angeordnet sind.

Fig. 7a zeigt eine Vergrößerung der Darstellung aus Fig. 7. Man erkennt hier dass die Kontaktoberfläche 28a leicht schräg gestellt ist gegenüber dem Spalt Sp bzw. der in der Figur eingezeichneten Begrenzungslinie des Spalts SP. Bevorzugt weist die Kontaktoberfläche gegenüber diesem Spalt bzw. dessen (geometrischer) Begrenzungslinie einen Winkel a auf, der zwischen 1° und 20°, bevorzugt zwischen 1° und 15°, bevorzugt zwischen 1° und 10° und besonders bevorzugt zwischen 1° und 8° liegt. Bevorzugt liegt in einem vollständig eingeschwenkten Zustand des Verriegelungselements die Kontaktoberfläche 28 flächig an der Kontaktoberfläche 26 an.

Figur 8 zeigt eine weitere Darstellung eines Seitenteilträgers 4. Man erkennt, dass hier neben dem Verriegelungselement 22 und der hierdurch ausgebildeten Nut 53, in welche das zweite Verriegelungselement (nicht gezeigt) eingreift, auch Dämpfungs- bzw. Vorspannelemente 52 und 54 vorgesehen sind. Diese Vorspannelemente 52, 54 bewirken ebenfalls bei einem Zusammenschluss mit dem zweiten (nicht gezeigten) Seitenteilträger ein gezieltes Schließen der Blasform. Diese Vorspannelemente können dabei eine Kraft erzeugen, welche die beiden Seitenteilträger auseinander drückt, welche aber durch diejenige Kraft, welche von den Verriegelungselementen erzeugt wird überwunden wird. Das Bezugszeichen 56 kennzeichnet Halterungen, an denen eine Schwenkwelle zum Schwenken des Blasformträgerteils aufgenommen werden kann.

Figur 9 zeigt eine Seitenansicht des in Figur 8 gezeigten Seitenteilträgers. Dabei ist auch hier wiederum das Verriegelungselement 22 dargestellt.

### Bezugszeichenliste

- 1: Umformungsstation
- 4,6: Seitenteilträger
- 14, 16: Blasformseitenteile
- 20: Verriegelungsmechanismus
- 22: erstes Verriegelungselement
- 23, 25: Ausnehmung
- 24: zweites Verriegelungselement
- 26, 28: Kontaktoberflächen
- 26a, 28a: geradlinige Abschnitte
- 34, 36: Formschalen
- 34a: Vorsprung
- 36a: Ausnehmung
- 41: Hebelarm
- 42, 44: Kontaktflächen
- 43: Kurvenrolle
- 52, 54: Vorspannelemente
- 53: Nut
- 56: Halterungen
- 122, 124: Verriegelungselemente Stand der Technik)
- S: Hauptschwenkachse
- S1: Schwenkachse
- a: Winkel zwischen Spalt und Kontaktoberfläche
- Sp: Spalt

## Patentansprüche

1. Umformungsstation (1) zum Umformen von Kunststoffvorformlingen (10) zu Kunststoffbehältnissen wobei die Umformungsstation (1) zwei Seitenteilträger (4, 6) zum Tragen von Seitenteilen (14, 16) einer Blasform aufweist sowie bevorzugt einen Bodenteilträger zum Tragen eines Bodenteils der Blasform, wobei diese Seitenteile (14, 16) und das Bodenteil (18) der Blasform gemeinsam einen Hohlraum (15) ausbilden, innerhalb dessen die Kunststoffvorformlinge (10) durch Beaufschlagung mit einem fließförmigen Medium zu den Kunststoffbehältnissen umformbar sind, wobei wenigstens einer der beiden Seitenteilträger zum Öffnen und/oder Schließen der Blasform gegenüber dem anderen Seitenteilträger bezüglich einer vorgegebenen Hauptachse (S) schwenkbar ist und wobei die Umformungsstation einen Verriegelungsmechanismus aufweist, um in einem geschlossenen Zustand der Blasform einen Seitenteilträger (4) mit dem anderen Seitenteilträger (6) zu verriegeln und wobei der Verriegelungsmechanismus (20) ein zweites Verriegelungselement (24) aufweist, welches bezüglich einer vorgegebenen Schwenkachse (S1) schwenkbar ist und welches zum Verriegeln der Seitenteilträger mit einem ersten Verriegelungselement (22) ineinander greift und wenigstens eines der beiden Verriegelungselemente eine erste Kontaktoberfläche (26) aufweist, welche dazu geeignet ist, beim Verriegeln mit dem ersten Verriegelungselement (22) mit einer zweiten Kontaktoberfläche (28) des ersten Verriegelungselements (22) zusammenzuwirken, wobei wenigstens eine dieser Kontaktoberflächen derart ausgebildet ist, dass bei einem Schwenkvorgang des zweiten Verriegelungselements (24) bezüglich der Schwenkachse (S1) in Richtung des ersten Verriegelungselements (22) die beiden Seitenteilträger (4, 6) aufeinander zu gedrängt werden,
**dadurch gekennzeichnet, dass**
das erste Verriegelungselement (22) und das zweite Verriegelungselement (24) derart ausgebildet sind, dass in einer vorgegebenen Schwenkstellung des zweiten Verriegelungselements (24) gegenüber dem ersten Verriegelungselement (22) sich die Kontaktoberflächen (26, 28) der beiden Verriegelungselemente (22, 24) gegenüberstehen, jedoch ein Spalt (Sp) zwischen den beiden Kontaktoberflächen (26, 28) ausgebildet ist, wobei es sich hierbei um eine Stellung handelt, in der die Umformungsstation im Wesentlichen geschlossen ist und nicht mehr geöffnet werden kann und die Umformungsstation druckkissenfrei ausgebildet ist.

2. Umformungsstation (1) nach Anspruch 1,
**dadurch gekennzeichnet, dass**
bei dem Schwenkvorgang des zweiten Verriegelungselements (24) in Richtung des ersten Verriegelungselements (22) zunächst die beiden Seitenteilträger (4, 6) bezüglich einander arretiert und anschließend aufeinander zugedrängt werden.

3. Umformungsstation nach wenigstens einem der vorangegangenen Ansprüche,
**dadurch gekennzeichnet, dass**
die Kontaktoberfläche (26, 28) eines Verriegelungselements (22, 24) einen gekrümmten und/oder schrägen Abschnitt (26a) aufweist, der mit der Kontaktoberfläche (28, 26) des anderen Verriegelungselements (24, 22) zusammenwirkt, um die beiden Seitenteilträger aufeinander zuzustellen.

4. Umformungsstation nach Anspruch 1,
**dadurch gekennzeichnet, dass**
der Spalt (Sp) durch eine weitere Schwenkbewegung des zweiten Verriegelungselements (24) gegenüber dem anderen Verriegelungselement (22) verringerbar ist.

5. Umformungsstation nach wenigstens einem der vorangegangenen Ansprüche,
**dadurch gekennzeichnet, dass**
die Seitenteile (14, 16) und/oder die Seitenteile (14, 16) tragende Formschalen (34, 36) einander flächig kontaktierende Kontaktieroberflächen (34a, 36a) aufweisen.

6. Umformungsstation nach Anspruch 5,
**dadurch gekennzeichnet, dass**
wenigstens eine dieser Kontaktoberflächen einen sich in Richtung der Hauptachse (S) erstreckenden Vorsprung (42) aufweist.

7. Umformungsstation nach Anspruch 6,
**dadurch gekennzeichnet, dass**
die andere dieser Kontaktoberflächen (36a, 34a) eine sich in Richtung der Hauptachse erstreckende Ausnehmung (44) aufweist, welche geometrisch derart an den Vorsprung (42) angepasst ist.

8. Umformungsstation nach wenigstens einem der vorangegangenen Ansprüche,
**dadurch gekennzeichnet, dass**
wenisgtens eine der Kontaktoberflächen der Verriegelungselemente (22, 24) eine gehärtete Kontaktoberfläche ist.

9. Verfahren zum Schließen einer Umformungsstation zum Umformen von Kunststoffvorformlingen (10) zu Kunststoffbehältnissen wobei die Umformungsstation (1) zwei Seitenteilträger (4, 6) zum Tragen von Seitenteilen (14, 16) einer Blasform aufweist sowie bevorzugt einen Bodenteilträger zum Tragen eines Bodenteils der Blasform, wobei diese Seitenteile (14, 16) und das Bodenteil (18) der Blasform gemeinsam einen Hohlraum (15) ausbilden, innerhalb dessen die Kunststoffvorformlinge (10) durch Beaufschlagung mit einem fließförmigen Medium zu den Kunststoffbehältnissen umgeformt werden, wobei wenigstens einer der beiden Seitenteilträger zum Schließen der Blasform gegenüber dem anderen Seitenteilträger bezüglich einer vorgegebenen Hauptachse (S) geschwenkt wird und wobei die Umformungsstation einen Verriegelungsmechanismus aufweist, um in einem geschlossenen Zustand der Blasform einen Seitenteilträger (4) mit dem anderen Seitenteilträger (6) zu verriegeln und wobei der Verriegelungsmechanismus (20) ein zweites Verriegelungselement (24) aufweist, welches bezüglich einer vorgegebenen Schwenkachse (S1) geschwenkt und welches zum Verriegeln der Seitenteilträger mit einem ersten Verriegelungselement (22) ineinander greift, wobei wenigstens eines der beiden Verriegelungselemente eine erste Kontaktoberfläche (26) aufweist, welche dazu geeignet ist, beim Verriegeln mit dem ersten Verriegelungselement (22) mit einer zweiten Kontaktoberfläche (28) des ersten Verriegelungselements (22) zusammenzuwirken, wobei wenigstens eine dieser Kontaktoberflächen derart ausgebildet ist, dass bei einem Schwenkvorgang des zweiten Verriegelungselements (24) bezüglich der Schwenkachse (S1) in Richtung des ersten Verriegelungselements (22) die beiden Seitenteilträger (4, 6) aufeinander zu gedrängt werden
**dadurch gekennzeichnet, dass**
das erste Verriegelungselement (22) und das zweite Verriegelungselement (24) derart ausgebildet sind, dass in einer vorgegebenen Schwenkstellung des zweiten Verriegelungselements (24) gegenüber dem ersten Verriegelungselement (22) sich die Kontaktoberflächen (26, 28) der beiden Verriegelungselemente (22, 24) gegenüberstehen, jedoch ein Spalt (Sp) zwischen den beiden Kontaktoberflächen (26, 28) ausgebildet ist, wobei es sich hierbei um eine Stellung handelt, in der die Umformungsstation im Wesentlichen geschlossen ist und nicht mehr geöffnet werden kann und die Umformungsstation druckkissenfrei ausgebildet ist.

## Claims

1. Transforming station (1) for transforming plastic parisons (10) into plastic containers, wherein the transforming station (1) has two side part supports (4, 6) for supporting side parts (14, 16) of a blow mould, and preferably has a base part support for supporting a base part of the blow mould, wherein these side parts (14, 16) and the base part (18) of the blow mould together form a hollow space (15) within which the plastic parisons (10) can be transformed into the plastic containers by application of a free-flowing medium, wherein at least one of the two side part supports for opening and/or closing the blow mould is pivotable relative to the other side part with respect to a predetermined main axis (S), and wherein the transforming station has a locking mechanism in order in a closed state of the blow mould to lock a side part support (4) with the other side part support (6), and wherein the locking mechanism (20) has a second locking element (24) which is pivotable with respect to a predetermined pivot axis (S1) and which interengages with a first locking element (22) for locking the side parts, wherein at least one of the two locking elements has a first contact surface (26) which is suitable to co-operate with a second contact surface (28) of the first locking element (22) during locking with the first locking element (22), wherein at least one of these contact surfaces is designed in such a way that in a pivoting operation of the second locking element (24) with respect to the pivot axis (S1) in the direction of the first locking element (22) the two side part supports (4, 6) are pushed towards one another,
**characterised in that**
the first locking element (22) and the second locking element (24) are formed in such a way that in a predetermined pivot position of the second locking element (24) with respect to the first locking element (22) the contact surfaces (26, 28) of the two locking elements (22, 24) are opposite one another, but a gap (Sp) is formed between the two contact surfaces (26, 28), wherein this constitutes a position in which the transforming station is substantially closed and can no longer be opened and the transforming station is designed without pressure pads.

2. Transforming station (1) according to claim 1,
**characterised in that**
in a pivoting operation of the second locking element (24) in the direction of the first locking element (22) initially the two side part supports (4, 6) are latched with respect to one another and then are pushed towards one another.

3. Transforming station according to at least one of the preceding claims,
**characterised in that**
the contact surface (26, 28) of a locking element (22, 24) has a curved and/or oblique portion (26a) which co-operates with the contact surface (28, 26) of the other locking element (24, 22) in order to advance the two side part supports towards one another.

4. Transforming station according to claim 1,
**characterised in that**
the gap (Sp) can be reduced by a further pivoting movement of the second locking element (24) with respect to the other locking element (22).

5. Transforming station according to at least one of the preceding claims,
**characterised in that**
the side parts (14, 16) and/or the mould shells (34, 36) supporting the side parts (14, 16) have contact surfaces (34a, 36a) which contact one another flatly.

6. Transforming station according to claim 5,
**characterised in that**
at least one of these contact surfaces has a projection (42) extending in the direction of the main axis (S).

7. Transforming station according to claim 6,
**characterised in that**
at least the other one of these contact surfaces (36a, 34a) has a recess (44) which extends in the direction of the main axis and in this way is geometrically adapted to the projection (42).

8. Transforming station according to at least one of the preceding claims,
**characterised in that**
at least one of the contact surfaces of the locking elements (22, 24) is a hardened contact surface.

9. Method for closing a transforming station for transforming plastic parisons (10) into plastic containers, wherein the transforming station (1) has two side part supports (4, 6) for supporting side parts (14, 16) of a blow mould, and preferably has a base part support for supporting a base part of the blow mould, wherein these side parts (14, 16) and the base part (18) of the blow mould together form a hollow space (15) within which the plastic parisons (10) are transformed into the plastic containers by application of a free-flowing medium, wherein at least one of the two side part supports for closing the blow mould is pivoted relative to the other side part with respect to a predetermined main axis (S), and wherein the transforming station has a locking mechanism in order in a closed state of the blow mould to lock a side part support (4) with the other side part support (6), and wherein the locking mechanism (20) has a second locking element (24) which is pivoted with respect to a predetermined pivot axis (S1) and which interengages with a first locking element (22) for locking the side parts, wherein at least one of the two locking elements has a first contact surface (26) which is suitable to co-operate with a second contact surface (28) of the first locking element (22) during locking with the first locking element (22), wherein at least one of these contact surfaces is designed in such a way that in a pivoting operation of the second locking element (24) with respect to the pivot axis (S1) in the direction of the first locking element (22) the two side part supports (4, 6) are pushed towards one another,
**characterised in that**
the first locking element (22) and the second locking element (24) are formed in such a way that in a predetermined pivot position of the second locking element (24) with respect to the first locking element (22) the contact surfaces (26, 28) of the two locking elements (22, 24) are opposite one another, but a gap (Sp) is formed between the two contact surfaces (26, 28), wherein this constitutes a position in which the transforming station is substantially closed and can no longer be opened and the transforming station is designed without pressure pads.

## Revendications

1. Poste de façonnage (1) servant à façonner des préformes en matière plastique (10) en des récipients en matière plastique, dans lequel le poste de façonnage (1) présente deux supports de partie latérale (4, 6) servant à supporter des parties latérales (14, 16) d'un moule de soufflage ainsi que de manière préférée un support de partie de fond servant à supporter une partie de fond du moule de soufflage, dans lequel lesdites parties latérales (14, 16) et la partie de fond (18) du moule de soufflage réalisent conjointement une cavité (15), à l'intérieur de laquelle les préformes en matière plastique (10) peuvent être façonnées par l'action exercée avec un milieu fluide en les récipients en matière plastique, dans lequel au moins un des deux supports de partie latérale peut pivoter par rapport à un axe principal (S) prédéfini par rapport à l'autre support de partie latéral pour ouvrir et/ou fermer le moule de soufflage et dans lequel le poste de façonnage présente un mécanisme de verrouillage pour verrouiller dans un état fermé du moule de soufflage un support de partie latérale (4) à l'autre support de partie latérale (6) et dans lequel le mécanisme de verrouillage (20) présente un second élément de verrouillage (24), lequel peut pivoter par rapport à un axe de pivotement (S1) prédéfini et lequel s'imbrique pour verrouiller les supports de partie latérale avec un premier élément de verrouillage (22) et au moins un des deux éléments de verrouillage présente une première surface de contact (26), laquelle est adaptée pour coopérer, lors du verrouillage avec le premier élément de verrouillage (22), avec une deuxième surface de contact (28) du premier élément de verrouillage (22), dans lequel au moins une desdites surfaces de contact est réalisée de telle manière que lors d'une opération de pivotement du second élément de verrouillage (24) par rapport à l'axe de pivotement (S1) en direction du premier élément de verrouillage (22), les deux supports de partie latérale (4, 6) sont repoussés l'un vers l'autre,
**caractérisé en ce que**
le premier élément de verrouillage (22) et le second élément de verrouillage (24) sont réalisés de telle manière que dans une position de pivotement prédéfinie du second élément de verrouillage (24) par rapport au premier élément de verrouillage (22), les surfaces de contact (26, 28) des deux éléments de verrouillage (22, 24) se font face, toutefois une fente (Sp) est réalisée entre les deux surfaces de contact (26, 28), dans lequel il s'agit dans le cas présent d'une position, dans laquelle le poste de façonnage est sensiblement fermé et ne peut plus être ouvert et le poste de façonnage est réalisé sans coussin de pression.

2. Poste de façonnage (1) selon la revendication 1,
**caractérisé en ce que**
lors de l'opération de pivotement du second élément de verrouillage (24) en direction du premier élément de verrouillage (22), les deux supports de partie latérale (4, 6) sont dans un premier temps arrêtés l'un par rapport à l'autre puis sont poussés l'un vers l'autre.

3. Poste de façonnage selon au moins l'une quelconque des revendications précédentes,
**caractérisé en ce que**
la surface de contact (26, 28) d'un élément de verrouillage (22, 24) présente une section (26a) incurvée et/ou oblique, qui coopère avec la surface de contact (28, 26) de l'autre élément de verrouillage (24, 22) pour rapprocher les deux supports de partie latérale l'un vers l'autre.

4. Poste de façonnage selon la revendication 1,
**caractérisé en ce que**
la fente (Sp) peut être réduite par un autre déplacement par pivotement du second élément de verrouillage (24) par rapport à l'autre élément de verrouillage (22).

5. Poste de façonnage selon au moins l'une quelconque des revendications précédentes,
**caractérisé en ce que**
les parties latérales (14, 16) et/ou des coques de moulage (34, 36) supportant les parties latérales (14, 16) présentent des surfaces de contact (34a, 36a) en contact à plat les unes avec les autres.

6. Poste de façonnage selon la revendication 5,
**caractérisé en ce que**
au moins une desdites surfaces de contact présente une partie faisant saillie (42) s'étendant en direction de l'axe principal (S).

7. Poste de façonnage selon la revendication 6,
**caractérisé en ce que**
l'autre desdites surfaces de contact (36a, 34a) présente un évidement (44) s'étendant en direction de l'axe principal, lequel est adapté de manière géométrique de cette manière à la partie faisant saillie (42).

8. Poste de façonnage selon au moins l'une quelconque des revendications précédentes,
**caractérisé en ce que**
au moins une des surfaces de contact des éléments de verrouillage (22, 24) est une surface de contact durcie.

9. Procédé servant à fermer un poste de façonnage servant à façonner des préformes en matière plastique (10) en des récipients en matière plastique, dans lequel le poste de façonnage (1) présente deux supports de partie latérale (4, 6) servant à supporter des parties latérales (14, 16) d'un moule de soufflage ainsi que de manière préférée un support de partie de fond servant à supporter une partie de fond du moule de soufflage, dans lequel lesdites parties latérales (14, 16) et la partie de fond (18) du moule de soufflage réalisent conjointement une cavité (15), à l'intérieur de laquelle les préformes en matière plastique (10) sont façonnées par l'action exercée par un milieu fluide en les récipients en matière plastique, dans lequel au moins un des deux supports de partie latérale est pivoté pour fermer le moule de soufflage par rapport à l'autre support de partie latérale par rapport à un axe principal (S) prédéfini et dans lequel le poste de façonnage présente un mécanisme de verrouillage pour verrouiller dans un état fermé du moule de soufflage un support de partie latérale (4) à l'autre support de partie latérale (6) et dans lequel le mécanisme de verrouillage (20) présente un second élément de verrouillage (24), lequel est pivoté par rapport à un axe de pivotement (S1) prédéfini et lequel s'imbrique pour verrouiller les supports de partie latérale avec un premier élément de verrouillage (22), dans lequel au moins un des deux éléments de verrouillage présente une première surface de contact (26), laquelle est adaptée pour coopérer lors du verrouillage avec le premier élément de verrouillage (22) avec une deuxième surface de contact (28) du premier élément de verrouillage (22), dans lequel au moins une desdites surfaces de contact est réalisée de telle manière que lors d'une opération de pivotement du second élément de verrouillage (24) par rapport à l'axe de pivotement (S1) en direction du premier élément de verrouillage (22), les deux supports de partie latérale (4, 6) sont poussés l'un vers l'autre,
**caractérisé en ce que**
le premier élément de verrouillage (22) et le second élément de verrouillage (24) sont réalisés de telle manière que dans une position de pivotement prédéfinie du second élément de verrouillage (24) par rapport au premier élément de verrouillage (22), les surfaces de contact (26, 28) des deux éléments de verrouillage (22, 24) se font face, toutefois une fente (Sp) est réalisée entre les deux surfaces de contact (26, 28), dans lequel il s'agit dans le cas présent d'une position, dans laquelle le poste de façonnage est sensiblement fermé et ne peut plus être ouvert et le poste de façonnage est réalisé sans coussin de pression.
